# EUROPEAN PATENT SPECIFICATION

(11) **EP 3 339 752 B1**
(45) Date of publication and mention of the grant of the patent: **01.05.2019**
(21) Application number: 16206125.3
(22) Date of filing: 22.12.2016
(51) Int. Cl.: F24D 19/10, G05D 23/19

(54) **ROOM TEMPERATURE CONTROL SYSTEM**
SYSTEM ZUR RAUMTEMPERATURREGELUNG
SYSTÈME DE RÉGULATION DE LA TEMPÉRATURE AMBIANTE

(43) Date of publication of application: 27.06.2018
(73) Proprietor: Danfoss A/S, 6430 Nordborg (DK)
(72) Inventor: NIELSEN, Peter Gammeljord, 7100 Vejle (DK); HESSELDAHL, Søren, 7182 Bredsten (DK); AMELINAS, Justinas, 8600 Silkeborg (DK)

(56) References cited:
- EP-A1- 2 530 390
- EP-A2- 1 564 616
- GB-A- 2 459 664
- US-A1- 2010 045 470

## Description

The present invention relates to a room temperature control system having at least two radiators located in the same room each radiator being provided with a valve for controlling a flow of a heat carrying fluid through the respective radiator, each valve being actuated by an electronic control unit and the control system having at least one temperature sensor. Such a room temperature control system is known from patent application US2010/045470 A1.

In the present description the term "radiator" is used as an abbreviation for a heat exchanger. The heat exchanger can be as well a floor heating line or a heat exchanger of a cooling system. The room temperature control system can in certain embodiments be used for lowering the temperature of a room.

In such a system a user for example has to set the set-point for each of the control units in order to achieve the desired temperature.

The object underlying the invention is to have a system providing a good comfort.

This object is solved with a room temperature control system as described at the outset in that the control units are part of a communication system in which the control units communicate with each other to share information and the control units control the valves according to the shared information.

In such a system the comfort can be increased in that at least part of the information inputted into one control unit is shared by the respective control unit with the other control unit or other control units. It is, for example, possible to communicate from one control unit the set-point to the other control unit(s) so that only one control unit has to be adjusted with respect to the set-point. Since all radiators are located in a same room the control units can communicate with each other to avoid an imbalance of heat between the radiators in the room which could occur, for example, after a night set back, in an open-window condition or the like.

In an embodiment of the invention all control units have the same rights. In other words, there is no master or router or central unit controlling all control units. The control units just share information without having different priorities. This also makes the system more robust or even redundant because if one control unit fails the others are still working and can perform the specified tasks (in contrast to a system with a router or master, where the system is not working if the master or router fails).

In an embodiment of the invention the control units communicate wireless. In this case a wired connection between the control units can be avoided.

In an embodiment of the invention a communication between control units is a Bluetooth connection. In the preferred embodiment the communication is Bluetooth Low energy (Bluetooth LE, BLE).

In an embodiment of the invention each control unit comprises a memory, said memory storing for each of a predetermined number of input signal situations an algorithm for performing specific control of the valve. In other words, each control units receiving a specific input signal "knows" what to do. In addition, or as an alternative to the above mentioned appointment of one of the control units as master, each control unit know what to do when another control unit indicates a sudden decrease or increase of temperature as it occurs, for example, when a window near the radiator is opened. The algorithm could, for example, control the receiving control unit in such a way that the valve controlling the heat carrying fluid is maintained in the situation it has assumed before receipt of the specific information for a duration of 5 or 10 minutes. After this waiting time the specific control unit can itself test the room temperature to decide what to do next. Alternatively, all control units can close the valves when one control unit is measuring a sudden decrease in the temperature (indicating an open window) and first start heating again when no longer measuring a temperature decrease (indicating closed window).

In an embodiment of the invention each control unit is programmed to be part of the same control system. In this way the control units get the information to which group they belong.

In an embodiment of the invention the programming is executed via APP installed on a communication device. The communication device can be, for example, a smartphone or a tablet computer. An APP (abbreviation for application) is a comfortable way to program the control units.

In an alternative embodiment of the invention the programming is executed via a manual setup.

In an embodiment of the invention the control system can receive wireless information from an APP installed on a communication device. In this way it is possible, for example, to set a set-point of the control unit.

In an alternative embodiment the control system comprises at least one mechanical input device for receiving information.

In an embodiment of the invention each control unit has a mechanical input device. For example, each control unit could have a switch (or a display with touch function) and when pressed within a certain time frame, on all control units, they can communicate and thereafter they all know that they are placed in the same room.

In an embodiment of the invention the temperature sensor is located near or in the electronic control unit. The temperature sensor is in other words placed in the control unit near the valve and the control unit could be placed in a housing together with an actuator (could be an electric motor for actuating the valve) and the temperature sensor. This housing might then be mounted on the associated valve.

In an embodiment of the invention the temperature sensor is a standalone unit communicating wireless. The temperature sensor is placed in a housing together with communications means. The sensor housing could then for example be placed on a wall in a room and from here communicating with the associated control units within the same room.

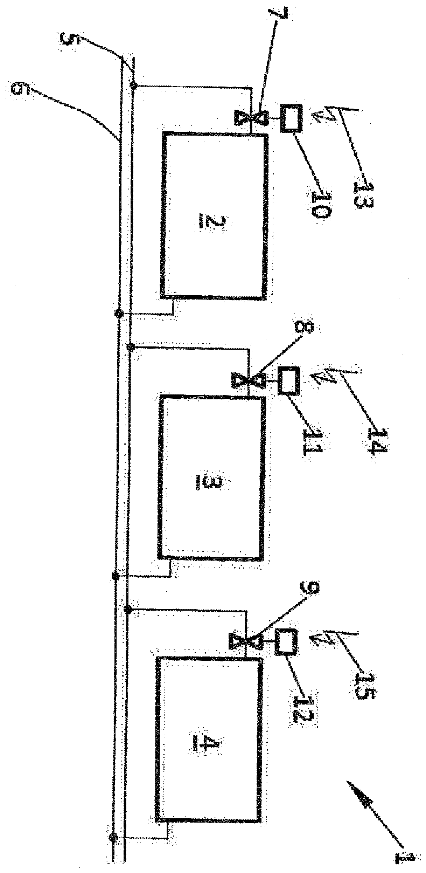

An embodiment of the invention will now be described in more detail with reference to the drawing, wherein:
The figure shows schematically a room temperature control system.

A room temperature control system 1 comprises at least two radiators (in the present example three radiators 2, 3, 4) which are located in the same room. Each radiator 2, 3, 4 is connected to a supply line 5 and to a return line 6. The supply line 5 supplies a heat carrying fluid to the respective radiators 2, 3, 4 and the return line 6 transports away the heat carrying fluid after it has heated or cooled the room in which the radiators 2, 3, 4 are located. The term "radiator" is used as an abbreviation for a heat exchanger. Such a heat exchanger can be used for heating (increasing the temperature) or cooling (decreasing the temperature).

A valve 7, 8, 9 is arranged between the supply line 5 and each of the radiators 2, 3, 4. Each valve 7, 8, 9 is controlled by an electronic control unit 10, 11, 12. As indicated by symbols 13, 14, 15 the control units 10, 11, 12 are part of a communication system in which the control units 10, 11, 12 communicate with each other. The control units 10, 11, 12 communicate wireless. Such a wireless communication can for example be performed by means of a Bluetooth connection.

All control units 10, 11, 12 have the same rights. In other words, there is no "master". The control units 10, 11, 12 only sharing information. Such an information can be, for example, a set-point for the desired temperature of the room. In this case it is sufficient to set the set-point at one of the control units 10, 11, 12 and the control units 10, 11, 12 share the information about the set-point and adjust themselves to the same set-point, for example.

The control units 10, 11, 12 control the valves 7, 8, 9 according to the shared information. The set-point can, for example, be inputted via an application or APP installed on a smartphone, a tablet computer or any other suitable communication device. However, not only the set-point can be programmed in such a way. Other parameters can be programmed as well, for example a temperature over the day or over a week. Alternatively, such a programming can be executed via a manual setup.

It is, however, not only possible, to program a specific control unit. The control system itself can receive wireless information from an APP installed on a communication device. Alternatively, the control system can comprise at least one mechanical input device for receiving information. In this case, one or each control unit can have a mechanical input device.

Each of the control units 10, 11, 12 comprise a temperature sensor and some means to compare the temperature detected by the sensor with the set-point and to open or close the respective valve 7, 8, 9, as it is generally known.

When, for example, one of the radiators 2 is located near a window and the window is opened. The temperature sensor of the control unit 10 will detect a rapid decrease in temperature. This information is transmitted to the other two control units 11, 12 and the other control units 11, 12 "know" what to do. It is, for example, possible that the other control units 11, 12 do not immediately open the respective valves 8, 9 in order to balance out the temperature decrease caused by the open window, but they wait for a predetermined time of, for example, 5 to 10 minutes.

Alternatively, an open window detector can be associated with the system. The open window detector uses also a wireless connection for example Bluetooth. If a window is opened this is detected by the window open detector and the window open detector is then sharing this information with all control units within the same room, just as the other control units would do.

Another sensor which could be connected to the system could be a temperature sensor. Just as the window open detector this temperature sensor is communicating wireless for example via Bluetooth and the temperature sensor is sharing its information with control units.

Another situation can arise when the radiators 2, 3, 4 belong to a room temperature control system having a night set back lowering the temperature overnight. When in such a system in the morning the temperature should be raised, the control units share the information in that they for example all start heating at the same time and adjust the valves 7, 8, 9 in such a way that, depending on the location in the respective room, thermal turbulences of the air in the room can be avoided.

It is furthermore possible that a radiator 3 being located in a position in which more heat is consumed, for example a radiator near a door, is supplied with a larger amount of heat carrying fluid. To this end the control unit 11 opens the valve 8 more than the other control units 10, 12 open their respective valves 7, 9. Each control units 10, 11, 12 comprises a memory in which one or more algorithms or programs are stored. Each of the algorithms belong to a certain input signal situation. Upon receipt of such a predetermined input signal situation the control unit "knows" what to do, i. e. it can actuate the respective valve 7, 8, 9 in a predetermined manner.

In such a system 1 it is necessary to tell each of the control units 10, 11, 12 that they belong to a common group, for example, that they are located in the same room. Such an information can be given to the control unit 10, 11, 12 via an APP installed on a communication device or via a manual or mechanical input device.

## Claims

1. Room temperature control system (1) having at least two radiators (2, 3, 4) located in the same room, each radiator (2, 3, 4) being provided with a valve (7, 8, 9) for controlling a flow of a heat carrying fluid through the respective radiator (2, 3, 4), each valve (7, 8, 9) being actuated by an electronic control unit (10, 11, 12) and the control system having at least one temperature sensor, **characterized in that** the control system (1) comprises a communication system (13, 14, 15), wherein the electronic control units (10, 11, 12) are part of the communication system (13, 14, 15) in which the electronic control units (10, 11, 12) communicate with each other to share information and the electronic control units (10, 11, 12) control the valves (7, 8, 9) according to the shared information.

2. Control system according to claim 1, **characterized in that** all electronic control units (10, 11, 12) have the same rights.

3. Control system according to claim 1 or 2, **characterized in that** the electronic control units (10, 11, 12) communicate wireless.

4. Control system according to claim 3, **characterized in that** a connection between electronic control units is a Bluetooth connection.

5. Control system according to any of claims 1 to 4, **characterized in that** each electronic control unit (10, 11, 12) comprises a memory, said memory storing for each of a predetermined number of input signal situations an algorithm for performing specific control of the valve.

6. Control system according to any of claims 1 to 5, **characterized in that** each electronic control unit (10, 11, 12) is programmed to be part of the same control system.

7. Control system according to claim 6 **characterized in that** the programming is executed via an APP installed on a communication device.

8. Control system according to claim 6 **characterized in that** the programming is executed via a manual set up.

9. Control system according to any of claims 1 to 8, **characterized in that** the control system can receive wireless information from an APP installed on a communication device.

10. Control system according to any of claims 1 to 8, **characterized in that** the control system comprises at least one mechanical input device for receiving information.

11. Control system according to claim 10, **characterized in that** each electronic control unit has a mechanical input device.

12. Control system according to claim 1, **characterized in that** the temperature sensor is located near or in the electronic control unit.

13. Control system according to claim 2, **characterized in that** the temperature sensor is a standalone unit communicating wireless

## Patentansprüche

1. Raumtemperatursteuersystem (1), das mindestens zwei Heizkörper (2, 3, 4), die sich im selben Raum befinden, besitzt, wobei jeder Heizkörper (2, 3, 4) mit einem Ventil (7, 8, 9) zum Steuern des Flusses eines wärmeführenden Fluids durch den entsprechenden Heizkörper (2, 3, 4) versehen ist, jedes Ventil (7, 8, 9) durch eine elektronische Steuereinheit (10, 11, 12) betätigt wird und das Steuersystem mindestens einen Temperatursensor besitzt, **dadurch gekennzeichnet, dass** das Steuersystem (1) ein Kommunikationssystem (13, 14, 15) umfasst, wobei die elektronischen Steuereinheiten (10, 11, 12) ein Teil des Kommunikationssystems (13, 14, 15) sind, wobei die elektronischen Steuereinheiten (10, 11, 12) miteinander kommunizieren, um Daten gemeinsam zu verwenden, und die elektronischen Steuereinheiten (10, 11, 12) die Ventile (7, 8, 9) gemäß den gemeinsam verwendeten Daten steuern.

2. Steuersystem nach Anspruch 1, **dadurch gekennzeichnet, dass** alle elektronischen Steuereinheiten (10, 11, 12) dieselben Rechte besitzen.

3. Steuersystem nach Anspruch 1 oder 2, **dadurch gekennzeichnet, dass** die elektronischen Steuereinheiten (10, 11, 12) drahtlos kommunizieren.

4. Steuersystem nach Anspruch 3, **dadurch gekennzeichnet, dass** eine Verbindung zwischen elektronischen Steuereinheiten eine Bluetooth-Verbindung ist.

5. Steuersystem nach einem der Ansprüche 1 bis 4, **dadurch gekennzeichnet, dass** jede elektronische Steuereinheit (10, 11, 12) einen Speicher umfasst, wobei im Speicher für jede einer vorgegebenen Anzahl von Eingangssignalsituationen ein Algorithmus zum Durchführen einer bestimmten Steuerung des Ventils gespeichert ist.

6. Steuersystem nach einem der Ansprüche 1 bis 5, **dadurch gekennzeichnet, dass** jede elektronische Steuereinheit (10, 11, 12) programmiert ist, ein Teil desselben Steuersystems zu sein.

7. Steuersystem nach Anspruch 6, **dadurch gekennzeichnet, dass** die Programmierung mittels einer APP, die in einer Kommunikationseinrichtung installiert ist, ausgeführt wird.

8. Steuersystem nach Anspruch 6, **dadurch gekennzeichnet, dass** die Programmierung mittels einer manuellen Einrichtung ausgeführt wird.

9. Steuersystem nach einem der Ansprüche 1 bis 8, **dadurch gekennzeichnet, dass** das Steuersystem Daten von einer APP, die in einer Kommunikationseinrichtung installiert ist, drahtlos empfangen kann.

10. Steuersystem nach einem der Ansprüche 1 bis 8, **dadurch gekennzeichnet, dass** das Steuersystem mindestens eine mechanische Eingabeeinrichtung zum Empfangen von Daten umfasst.

11. Steuersystem nach Anspruch 10, **dadurch gekennzeichnet, dass** jede elektronische Steuereinheit eine mechanische Eingabeeinrichtung besitzt.

12. Steuersystem nach Anspruch 1, **dadurch gekennzeichnet, dass** sich der Temperatursensor in der Nähe der oder in der elektronischen Steuereinheit befindet.

13. Steuersystem nach Anspruch 2, **dadurch gekennzeichnet, dass** der Temperatursensor eine drahtlos kommunizierende eigenständige Einheit ist.

## Revendications

1. Système de régulation de la température ambiante (1) présentant moins deux radiateurs (2, 3, 4) situés dans la même pièce, chaque radiateur (2, 3, 4) étant doté d'une vanne (7, 8, 9) pour réguler un flux d'un fluide porteur de chaleur à travers le radiateur respectif (2, 3, 4), chaque vanne (7, 8, 9) étant actionnée par une unité de commande électronique (10, 11, 12) et le système de régulation présentant au moins un capteur de température, **caractérisé en ce que** le système de régulation (1) comprend un système de communication (13, 14, 15), dans lequel les unités de commande électroniques (10, 11, 12) font partie du système de communication (13, 14, 15), dans lequel les unités de commande électroniques (10, 11, 12) communiquent les unes avec les autres pour partager des informations et les unités de commande électroniques (10, 11, 12) commandent les vannes (7, 8, 9) en fonction des informations partagées.

2. Système de régulation selon la revendication 1, **caractérisé en ce que** toutes les unités de commande électroniques (10, 11, 12) ont les mêmes droits.

3. Système de régulation selon la revendication 1 ou 2, **caractérisé en ce que** les unités de commande électroniques (10, 11, 12) communiquent en mode sans fil.

4. Système de régulation selon la revendication 3, **caractérisé en ce qu'**une connexion entre des unités de commande électroniques est une connexion Bluetooth.

5. Système de régulation selon l'une quelconque des revendications 1 à 4, **caractérisé en ce que** chaque unité de commande électronique (10, 11, 12) comprend une mémoire, ladite mémoire mémorisant pour chacune d'un nombre prédéterminé de situations de signal d'entrée un algorithme pour exécuter une commande spécifique de la vanne.

6. Système de régulation selon l'une quelconque des revendications 1 à 5, **caractérisé en ce que** chaque unité de commande électronique (10, 11, 12) est programmée pour faire partie du même système de régulation.

7. Système de régulation selon la revendication 6, **caractérisé en ce que** la programmation est exécutée par l'intermédiaire d'une application installée sur un dispositif de communication.

8. Système de régulation selon la revendication 6, **caractérisé en ce que** la programmation est exécutée par un réglage manuel.

9. Système de régulation selon l'une quelconque des revendications 1 à 8, **caractérisé en ce que** le système de régulation peut recevoir des informations sans fil depuis une application installée sur un dispositif de communication.

10. Système de régulation selon l'une quelconque des revendications 1 à 8, **caractérisé en ce que** le système de régulation comprend au moins un dispositif d'entrée mécanique pour recevoir des informations.

11. Système de régulation selon la revendication 10, **caractérisé en ce que** chaque unité de commande électronique comporte un dispositif d'entrée mécanique.

12. Système de régulation selon la revendication 1, **caractérisé en ce que** le capteur de température est situé près de l'unité de commande électronique ou à l'intérieur de celle-ci.

13. Système de régulation selon la revendication 2, **caractérisé en ce que** le capteur de température est une unité autonome communiquant en mode sans fil.
